# EUROPEAN PATENT APPLICATION

(11) **EP 2 478 991 A1**
(43) Date of publication of application: **25.07.2012**
(21) Application number: 09849506.2
(22) Date of filing: 18.09.2009
(51) Int. Cl.: B23K 26/06, B23K 26/08, B23K 26/10

(54) **LASER BEAM MACHINE**

(71) Applicant: Kataoka Corporation, Kyoto-shi Kyoto 601-8203 (JP)
(72) Inventor: MATSUMOTO, Junichi, Kyoto-shi Kyoto 601-8203 (JP)
(74) Representative: TBK
(86) International application number: PCT/JP2009/066349
(87) International publication number: WO 2011/033647

(57) **Abstract**

A laser beam machine 1 includes retention mechanisms 2 for retaining a substrate 0 not to be moved with a surface to be processed up, processing nozzles 3 traveling in the Y axis direction for emitting a laser beam to the surface to be processed of the substrate 0, the processing nozzles being also movable in the X axis direction, and a support mechanism 4 relatively movable in the X axis direction relative to this substrate 0 while supporting the substrate 0 from the lower side. In the laser beam machine 1, the substrate 0 is not moved at the time of laser beam machining, but the processing nozzles 3 are moved so as to irradiate a desired part with the laser beam. At the time of moving the processing nozzles 3 in the X axis direction, the support mechanism 4 is also moved in the X axis direction, so that interference with the support mechanism 4 and a laser beam axis is avoided. Thereby, there is no need for inverting the substrate at the time of conveying the substrate into and out of the laser beam machine. A required area of the laser beam machine itself is reduced as well.

## Description

### TECHNICAL FIELD

The present invention relates to a laser beam machine for performing laser scribing, patterning, and the like to a thin film in a manufacturing process of for example, a solar panel, an organic EL display, and a plasma display.

### BACKGROUND ART

This type of laser beam machine mainly irradiates a thin film with a laser beam formed on a surface to be processed of a substrate, so as to perform removal processing. In a laser beam machine already proposed by the applicant (refer to the following Patent Document 1), a substrate is conveyed by a platform truck while being levitated with using a levitation device for blowing out the air, and patterning is performed to a thin film by a laser beam emitted from processing nozzles installed in a predetermined processing region.

### PRIOR ART DOCUMENT

### PATENT DOCUMENT

Patent Document 1: Japanese Patent Application No. 2007-320629

### SUMMARY OF THE INVENTION

### PROBLEMS TO BE SOLVED BY THE INVENTION

The laser beam machine described above is excellently useful. However, there is a tendency that in order to reciprocate the substrate back and forth across the processing region at the time of laser beam machining, an area which is double or more of substrate size is required.

In addition, the laser beam machine described above mainly assumes a use method of placing the substrate with the surface to be processed down, emitting the laser beam down from the upper side of the substrate, making the laser beam pass through the substrate, and irradiating the surface to be processed with the laser beam. Meanwhile, in a CVD (Chemical Vapor Deposition) device, a sputtering device, and the like, a substrate is placed with a surface to be processed up, and a thin film is formed on the surface to be processed. Therefore, there is a need for arranging an inversion machine for inverting the substrate between these devices and a laser beam machine. When the substrate conveyed out of the laser beam machine is moved, the substrate is usually carried while being supported from the lower side with the surface to be processed up in order not to damage the thin film. After all, there is a need for inversion machines installed on both the front and rear sides of the laser beam machine.

Recently, the substrate is gradually enlarged (for example, 2,600 mm × 2,200 mm in G8 class). Thus, it is inevitable that both the laser beam machine and the inversion machine are enlarged more and more. Regarding the inversion machine, even height size is enlarged. Thus, there is a restriction that the inversion machine cannot be installed unless a ceiling of a factory is high.

A desired object of the present invention achieved in consideration with the above situations is to eliminate a need for the inversion machine, and to reduce a required area of the laser beam machine itself.

### MEANS FOR SOLVING THE PROBLEMS

In the present invention, a laser beam machine includes a retention mechanism for retaining a substrate not to be moved with a surface to be processed to which laser beam machining is performed up, processing nozzles traveling in the predetermined traveling direction for irradiating the surface to be processed of the substrate with a laser beam, the processing nozzles being also movable in the pitch feed direction crossing the traveling direction, and a support mechanism relatively movable in the pitch feed direction relative to this substrate while supporting the substrate from the lower side.

In the laser beam machine according to the present invention, the substrate is not moved at the time of the laser beam machining, but the processing nozzles are moved so as to irradiate a desired part of the surface to be processed with the laser beam. Typically, the processing nozzles travel so as to continuously expose a pulse laser beam, and grooves extending along the traveling direction thereof are formed in the thin film. At the time of moving the processing nozzles in the pitch feed direction, the support mechanism is also moved in the pitch feed direction, so that interference with the support mechanism and a laser beam axis is avoided. At this time, the support mechanism is displaced relative to the substrate, and the substrate is still unmoved. In this connection, by applying pitch feed of the processing nozzles, such processing that grooves extending along the pitch feed direction are formed in the thin film can be executed.

According to the present invention, the substrate is not moved at the time of the laser beam machining. Thus, a required area of the machine itself can be reduced, and there is no need for an inversion machine.

When a plurality of rotatable rolling bodies are provided in the support mechanism, and a lower surface of the substrate is disposed on these rolling bodies, the machine can be manufactured at relatively low cost.

Then, when the processing nozzles are installed on the lower side of the substrate, and the laser beam is emitted upward, made pass through the substrate, and irradiated the surface to be processed, any members do not be provided in the vicinity of an irradiation point of the laser beam, and there is not a problem that the members are burnt and sooting through a long time use.

When the processing nozzles are supported by the support mechanism to be able to travel in the traveling direction so as to be unitized, and the unit is movable in the pitch feed direction, maintenance such as repair and replacement can be performed for each unit.

When the plurality of units are arranged along the pitch feed direction, the laser beam machining can be performed to a plurality of parts at the same time. Especially, the present invention is effective in a case where pluralities of grooves extending along the traveling direction of the processing nozzles are formed. Further, since the substrate is supported at a plurality of points separated in the pitch feed direction, warp due to self-weight of the substrate can be suppressed, resulting in improvement of processing precision.

When an opening extending along the traveling direction is formed in the support mechanism, and an optical axis of the processing nozzle passes through this opening, the processing nozzles can be arranged at lower positions than the support mechanism, and a flexible location of the processing nozzles expands possibility of the laser beam machine design.

When the plurality of openings and the plurality of processing nozzles are arranged along the pitch feed direction, the laser beam machining can be performed to the plurality of parts at the same time.

### EFFECTS OF THE INVENTION

According to the present invention, there is no need for inverting the substrate at the time of conveying the substrate into the laser beam machine and conveying the substrate out of the laser beammachine. Thus, there is no need for the inversion machine. The required area of the laser beam machine itself is reduced as well.

### BRIEF DESCRIPTION OF THE DRAWINGS

Fig. 1 is an overall perspective view showing a laser beam machine of one embodiment of the present invention.
Fig. 2 is a partial perspective view showing processing nozzles and support mechanisms of the same laser beam machine.
Fig. 3 is an overall perspective view showing a laser beam machine of one embodiment of the present invention.
Fig. 4 is an exploded perspective view showing the same laser beam machine in which a dust collection nozzle is removed.
Fig. 5 is a partial exploded perspective view showing processing nozzles and a support mechanism of the same laser beam machine.

### MODES FOR CARRYING OUT THE INVENTION

Embodiments of the present invention will be described with reference to the drawings. A laser beam machine 1 described below is used in a manufacturing process of a thin-film solar cell so as to irradiate a photoelectric conversion film with a laser beam, a transparent conductive film, a back surface electrode film, and the like formed on an upper surface of a glass substrate 0, and to perform patterning of the films.

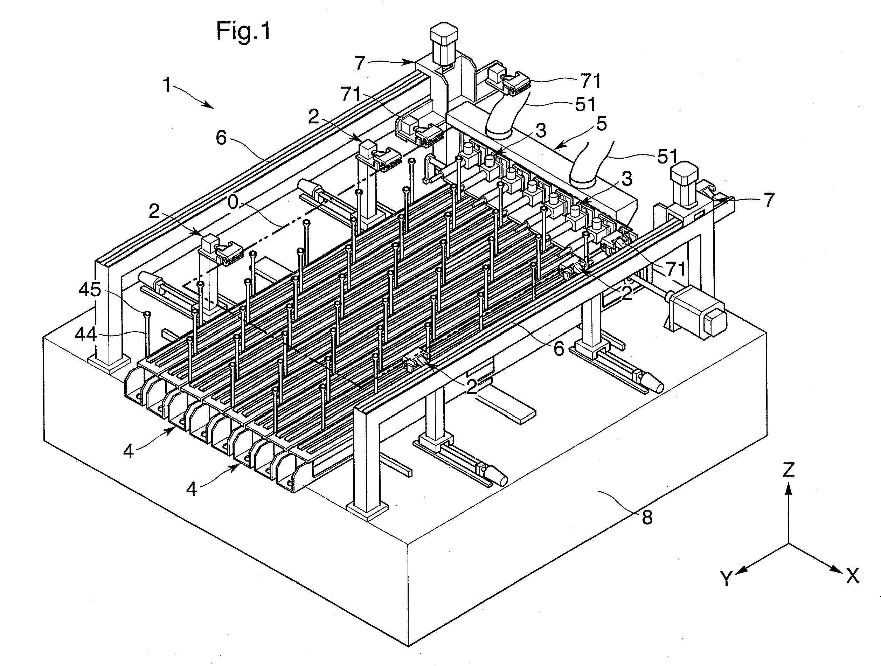

<First Embodiment> The laser beam machine 1 shown in Figs. 1 to 2 has major constituent elements including processing nozzle shaft units 3, 4 arranged on a base 8, retaining clampers 2 installed beside the processing nozzle shaft units 3, 4, a dust collection nozzle 5 bridged on the upper side of the processing nozzle shaft units 3, 4, and conveyance rails 6 and conveyance units 7 installed in both side parts of the base 8.

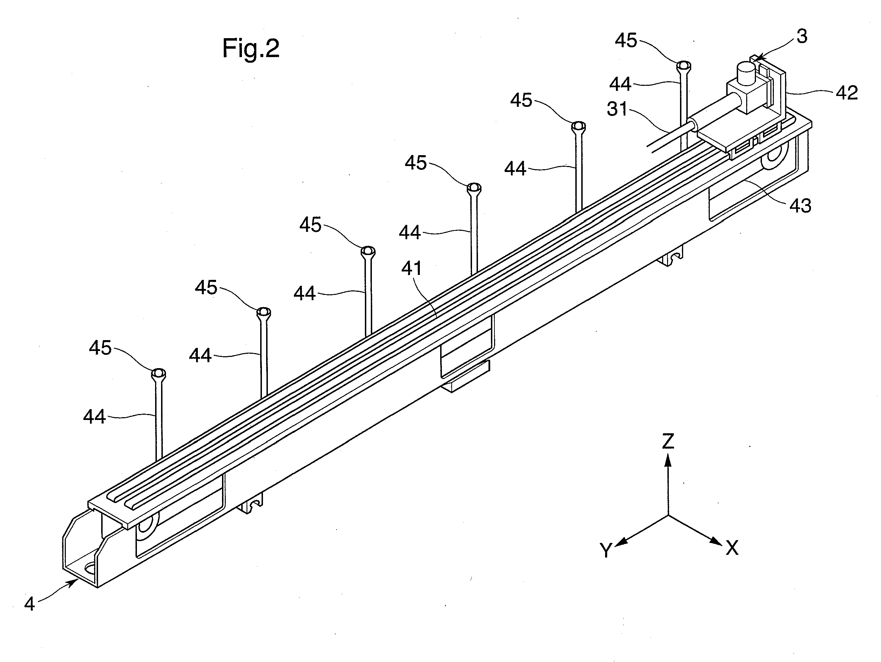

As shown in Fig. 2, the processing nozzle shaft units 3, 4 are members formed by unitizing support mechanisms 4 supporting the substrate 0 serving as an object of laser beam machining from the lower side, and processing nozzles 3 for irradiating a surface to be processed of the substrate 0 with the laser beam. Unit main bodies 4 serving as the support mechanisms extend in the front and rear direction (Y axis direction in the figures). Traveling rails 41 for guiding travel of platform trucks 42 are provided in upper parts of the unit main bodies, and timing belts 43 for making the platform trucks 42 travel are provided in interiors of the unit main bodies. The processing nozzles 3 are provided in the platform trucks 42.

The processing nozzles 3 are supported by the unit main bodies 4 via the platform trucks 42 and the traveling rails 41, so as to travel in the front and rear direction. Optical fibers 31 are connected to the processing nozzles 3. The laser beam supplied from a laser oscillator (not shown) is introduced into the processing nozzles 3 through the optical fibers 31, and emitted vertically upward from emitting ends in upper parts of the nozzles via collective lenses and the like in the processing nozzles 3.

A plurality of supports 44 are installed in side edges of the unit main bodies 4 intermittently in the front and rear direction. The substrate 0 conveyed into the laser beam machine 1 is supported by these supports 44. Rolling bodies 45 capable of freely rotating are provided in upper ends of the supports 44. The rolling bodies 45 are for example so-called ball bearings. The rolling bodies 45 are brought into contact with a lower surface of the substrate 0.

In the present embodiment, the pluralities of processing nozzle shaft units 3, 4 are arranged in the left and right direction (X axis direction in the figures). A linear servo mover for pitch feed is provided between the processing nozzle shaft units 3, 4 and the base 8. By this linear servo mover, the entire processing nozzle shaft units 3, 4 can be moved in the left and right direction.

The retaining clampers 2 are retention mechanisms for retaining the substrate 0 not to be moved at the time of laser beam machining. The retaining clampers 2 are placed at height positions so as to face the upper ends of the supports 44, and clamp side edges of the substrate 0.

The dust collection nozzle 5 is provided so as to suction powder dust generated by the patterning of the thin films. The dust collection nozzle 5 has a downward-opening slot-shape suction port expanding in the left and right direction. In the present embodiment, this dust collection nozzle 5 is moved in the front and rear direction following the processing nozzles 3. Duct hoses 51 are connected to the dust collection nozzle 5. The powder dust suctioned via the dust collection nozzle 5 is collected to a dust collection machine (not shown) via the duct hoses 51.

The conveyance rails 6 and the conveyance units 7 are to convey the substrate 0. The conveyance rails 6 are placed on the outer side of the processing nozzle shaft units 3, 4 and the retaining clampers 2, and extend in the front and rear direction. The conveyance units 7 travel along the conveyance rails 6. The conveyance units 7 are provided with conveying clampers 71. The conveying clampers 71 clamp the side edges of the substrate 0 at the time of conveying the substrate 0 in and out.

In time of the laser beam machining, firstly, the substrate 0 with the surface to be processed on which the thin films are formed up is conveyed in from the front side. That is, while clamping the side edges of the substrate 0 by the conveying clampers 71, the conveyance units 7 are driven. Thus, the substrate 0 is fed onto the processing nozzle shaft units 3, 4 and disposed on the supports 44. At the time of conveying the substrate 0 in and out, the rolling bodies 45 are brought into contact with the lower surface of the substrate 0 and roll, needless to say.

Next, the side edges of the substrate 0 are clamped by the retaining clampers 2, so that the substrate 0 is retained to the base 8.

After that, the processing nozzles 3 are moved to a desired processed part, and the laser beam is emitted upward, made pass through the substrate 0, and irradiating the thin films on the surface to be processed. Specifically, while the platform trucks 42 provided with the processing nozzles 3 travel in the front and rear direction, a pulse laser beam is continuously exposed and grooves extending in the front and rear direction are formed in the thin films. The entire units 3, 4 including the processing nozzles 3 are pitch-fed and moved in the left and right direction via the linear servo mover, so that formation positions of the grooves are changed. At this time, the supports 44 supporting the substrate 0 are displaced relative to the substrate 0. However, since the rolling bodies 45 are placed between the lower surface of the substrate 0 and the upper ends of the supports 44 and rotated, movement of the processing nozzle shaft units 3, 4 is not prevented. In this connection, while the processing nozzle shaft units 3, 4 are moved in the left and right direction, the pulse laser beam is continuously exposed, and grooves extending in the left and right direction can be formed in the thin films.

During the laser beam machining, preferably, the dust collection nozzle 5 is positioned immediately above a laser irradiation point, so as to suction and collect the generated powder dust appropriately.

When the laser beam machining is completed, the substrate 0 is conveyed out to the rear side. That is, after cancelling retention of the substrate 0 by the retaining clampers 2, while clamping the side edges of the substrate 0 by the conveying clampers 71, the conveyance units 7 are driven. Thus, the substrate 0 is fed out of the processing nozzle shaft units 3, 4.

According to the present embodiment, the laser beam machine 1 includes the retention mechanisms 2 for retaining the substrate 0 not to be moved with the surface to be processed to which the laser beam machining is performed up, the processing nozzles 3 traveling in the predetermined traveling direction for irradiating the surface to be processed of the substrate 0 with the laser beam, the processing nozzles being also movable in the pitch feed direction crossing the traveling direction, and the support mechanisms 4 relatively movable in the pitch feed direction relative to this substrate 0 while supporting the substrate 0 from the lower side. Thus, the substrate 0 does not have to be moved at the time of the laser beam machining, a required area of the machine 1 itself can be reduced, and there is no need for an inversion machine. Since the substrate 0 is not reciprocated, abrasion of the rolling bodies 45 is not easily caused.

Since the plurality of rotatable rolling bodies 45 are provided in the support mechanisms 4, and the lower surface of the substrate 0 is disposed on these rolling bodies 45, the machine can be manufactured at relatively low cost.

Since the processing nozzles 3 are installed on the lower side of the substrate 0, and the laser beam is emitted upward, made pass through the substrate 0, and irradiated the surface to be processed, any members do not be provided in the vicinity of the irradiation point of the laser beam, and there is not a problem that the members are burnt and sooting through a long time use.

Since the processing nozzles 3 are supported by the support mechanisms 4 to be able to travel in the traveling direction so as to be unitized, and the units 3, 4 are movable in the pitch feed direction, maintenance such as repair and replacement can be performed for each of the units 3, 4.

Since the pluralities of units 3, 4 are arranged along the pitch feed direction, the laser beam machining can be performed to a plurality of parts at the same time. Especially, the present invention is effective in a case where pluralities of grooves extending along the traveling direction of the processing nozzles 3 are formed. Further, since the substrate 0 can be supported at a plurality of points (of the rolling bodies 45) spread on a plane, warp due to self-weight of the substrate 0 can be suppressed, resulting in improvement of processing precision.

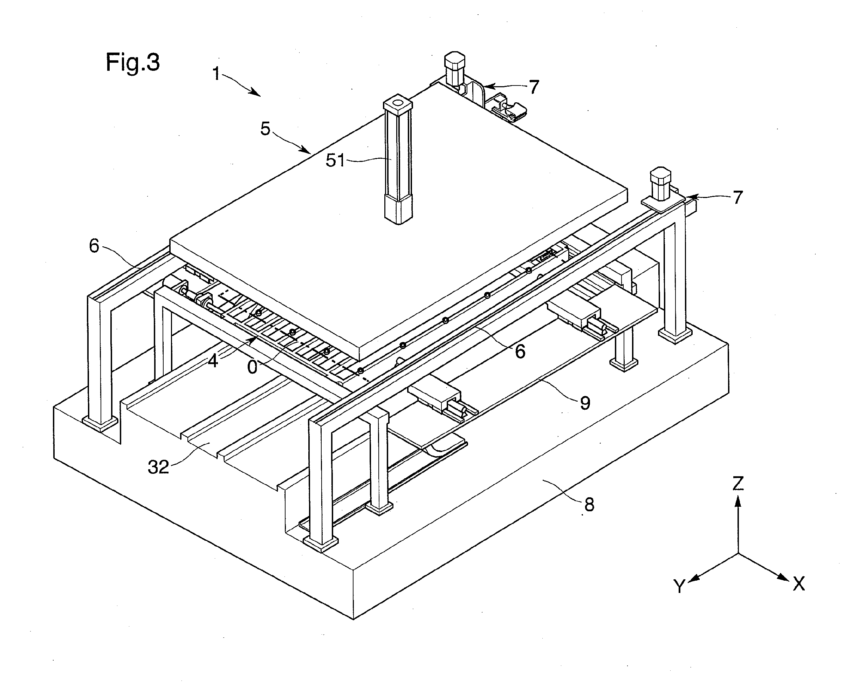

<Second Embodiment> A laser beam machine 1 shown in Figs. 3 to 5 has major constituent elements including processing nozzles 3 arranged on a base 8, a support mechanism 4 bridged on the upper side of the processing nozzles 3, retention pushing plates 2 installed beside the support mechanism 4, a dust collection nozzle 5 suspended on the upper side of the support mechanism 4, and conveyance rails 6 and conveyance units 7 installed in both side parts of the base 8. Hereinafter, differences from the first embodiment will be mainly described.

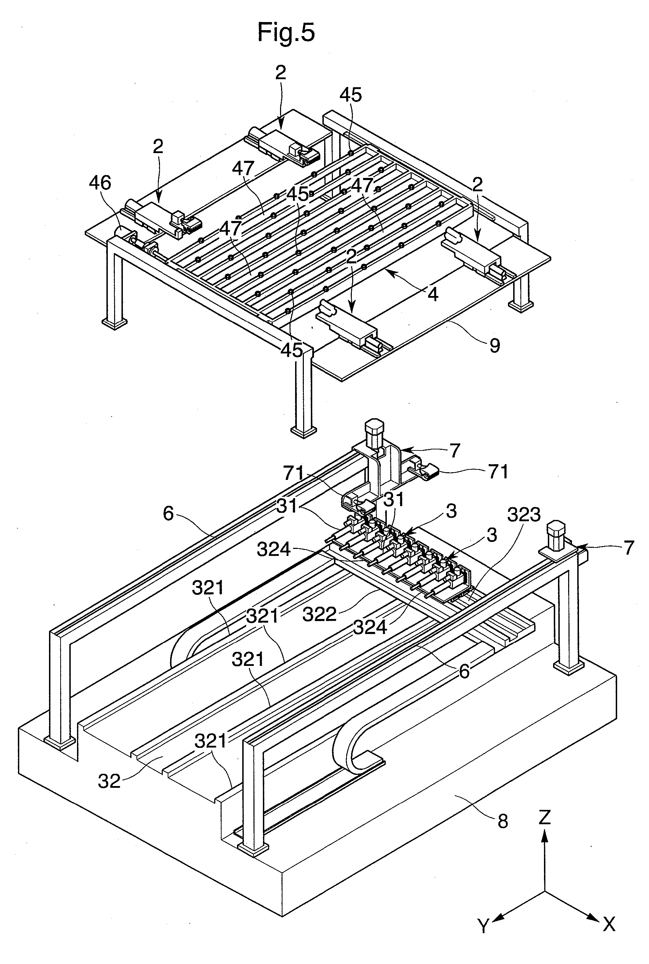

As shown in Fig. 5, the processing nozzles 3 are supported by a XY stage 32 in the present embodiment. The XY stage 32 is provided with Y axis rails 321 extending in the front and rear direction, an X axis unit 322 guided by the Y axis rails 321 so as to travel in the front and rear direction and extend in the left and right direction, the X axis unit including a X axis rail 323 in an upper part thereof, and platform trucks 324 guided by the X axis rail 323 so as to move in the left and right direction. A linear servo mover serves as a drive source for the platform trucks 324. In the present embodiment, the plurality of platform trucks 324 are arranged in the X axis unit 322, and each of the processing nozzles 3 is provided in each of the platform trucks 324. An optical fiber 31 for guiding the laser beam supplied from the laser oscillator is connected to each of the processing nozzles 3.

The support mechanism 4 mainly serves as an underframe held up at height where the underframe is not brought into contact with the XY stage 32, the processing nozzles 3, and the like by a frame 9 fixed to the base 8. The underframe 4 is formed into a shape in which a plurality of openings 47 expanding in the front and rear direction and passing through in the up and down direction are arranged in the left and right direction. The laser beam emitted from the processing nozzles 3 passes through the openings 47. A large number of rolling bodies 45 are scattered and provided in peripheral parts of the openings 47 of the underframe 4. This underframe 4 is supported by the frame 9 so as to be movable in the left and right direction. A pitch feed motor 46 for causing movement in the left and right direction of the underframe 4 is placed between the underframe 4 and the frame 9.

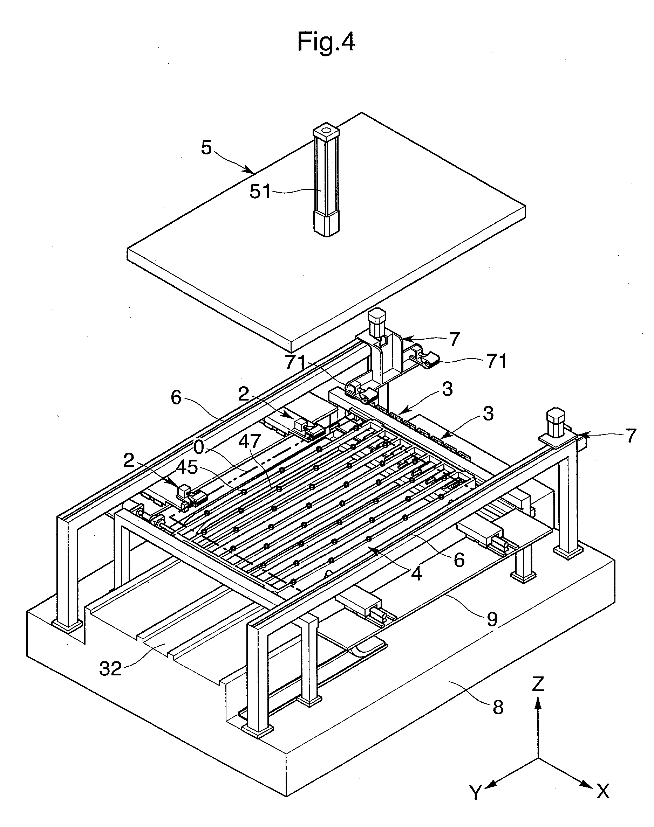

As shown in Fig. 4, the retention pushing plates 2 are the retention mechanisms for retaining the substrate 0 not to be moved at the time of the laser beam machining. The pairs of left and right retention pushing plates 2 are placed on the outer side of the underframe 4 on the frame 9. These retention pushing plates 2 are driven by air cylinders, brought close or separated in the left and right direction, and contacted with side end surfaces of the substrate 0 so as to nip the substrate 0 from the left and right sides.

The dust collection nozzle 5 is provided so as to suction the powder dust generated by the patterning of the thin films. The dust collection nozzle 5 is formed by scattering and arranging a large number of downward-opening suction ports in the front and rear and left and right directions, and the dust collection nozzle 5 is unmovable in the front and rear and left and right directions in the present embodiment. However, as well as the first embodiment, the dust collection nozzle may be moved following the processing nozzles 3. A duct hose 51 is connected to the dust collection nozzle 5, and the suctioned powder dust is collected to the dust collection machine via the duct hose 51.

The conveyance rails 6 and the conveyance units 7 are to convey the substrate 0. The conveyance rails 6 are placed on the outer side of the XY stage 32 and the frame 9, and extend in the front and rear direction. The conveyance units 7 travel along the conveyance rails 6. The conveyance units 7 are provided with conveying clampers 71.

In time of the laser beam machining, firstly, the substrate 0 with the surface to be processed on which the thin films are formed up is conveyed in from the front side. That is, while clamping the side edges of the substrate 0 by the conveying clampers 71, the conveyance units 7 are driven. Thus, the substrate 0 is fed onto the underframe 4 and disposed on the underframe 4.

Next, the substrate 0 is nipped from both the sides by pushing the retention pushing plates 2 to both the side end surfaces of the substrate 0, so that the substrate 0 is retained to the base 8.

After that, the processing nozzles 3 are moved to the desired processed part, and the laser beam is emitted upward, made pass through the substrate 0, and irradiating the thin films on the surface to be processed. Specifically, while the X axis unit 322 travels in the front and rear direction, the pulse laser beam is continuously exposed, and the grooves extending in the front and rear direction are formed in the thin films. The platform trucks 324 provided with the processing nozzles 3 are pitch-fed and moved in the left and right direction, so that the formation positions of the grooves are changed. At the same time, the underframe 4 is also moved in the left and right direction in conjunction with the platform trucks 324 so that a laser beam axis is not brought into contact with the underframe 4. At this time, the underframe 4 supporting the substrate 0 is displaced relative to the substrate 0. However, since the rolling bodies 45 are placed between the lower surface of the substrate 0 and an upper surface of the underframe 4 and rotated, the movement of the underframe 4 is not prevented. In this connection, while the platform trucks 324 and the underframe 4 are moved together in the left and right direction, the pulse laser beam is continuously exposed, and the grooves extending in the left and right direction can be formed in the thin films.

During the laser beam machining, preferably, the dust collection nozzle 5 is positioned immediately above the laser irradiation point, so as to suction and collect the generated powder dust appropriately.

When the laser beam machining is completed, the substrate 0 is conveyed out to the rear side. That is, after cancelling retention of the substrate 0 by the retention pushing plates 2, while clamping the side edges of the substrate 0 by the conveying clampers 71, the conveyance units 7 are driven. Thus, the substrate 0 is fed out of the underframe 4.

According to the present embodiment, the laser beam machine 1 includes the retention mechanisms 2 for retaining the substrate 0 not to be moved with the surface to be processed to which the laser beam machining is performed up, the processing nozzles 3 traveling in the predetermined traveling direction for irradiating the surface to be processed of the substrate 0 with the laser beam, the processing nozzles being also movable in the pitch feed direction crossing the traveling direction, and the support mechanism 4 relatively movable in the pitch feed direction relative to this substrate 0 while supporting the substrate 0 from the lower side. Thus, the substrate 0 does not have to be moved at the time of the laser beam machining, the required area of the machine 1 itself can be reduced, and there is no need for the inversion machine. Since the substrate 0 is not reciprocated, the abrasion of the rolling bodies 45 is not easily caused.

Since the plurality of rotatable rolling bodies 45 is provided in the support mechanism 4, and the lower surface of the substrate 0 is disposed on these rolling bodies 45, the machine can be manufactured at relatively low cost.

Since the processing nozzles 3 are installed on the lower side of the substrate 0, and the laser beam is emitted upward, made pass through the substrate 0, and irradiated the surface to be processed, any members do not be provided in the vicinity of the irradiation point of the laser beam, and there is not a problem that the members are burnt and sooting through a long time use.

Since the openings 47 extending along the traveling direction are formed in the support mechanism 4, and an optical axis of the processing nozzles 3 passes through the openings 47, the processing nozzles 3 can be arranged at lower positions than the underframe 4 of the support mechanism 4.

Since the openings 47 and the processing nozzles 3 are arranged along the pitch feed direction, the laser beam machining can be performed to the plurality of parts at the same time. Especially, the present invention is effective in a case where the pluralities of grooves extending along the traveling direction of the processing nozzles 3 are formed. Further, since the substrate 0 can be supported at the plurality of points (of the rolling bodies 45) spread on a plane, the warp due to the self-weight of the substrate 0 can be suppressed, resulting in the improvement of the processing precision.

It should be noted that the present invention is not limited to the embodiments described in detail above. For example, a rotation device for horizontally rotating the substrate 0 on the support mechanism 4 may be separately provided. Thus, without performing a pitch feed operation of the processing nozzles 3 and the support mechanism 4, grooves extending crosswise and lengthwise can be formed on (the thin films formed in) the surface to be processed of the substrate 0.

In the above embodiments, the laser beam supplied from the laser oscillator is guided to the processing nozzles 3 via the optical fibers 31. However, the laser beam may be guided to the processing nozzles 3 with using not the optical fibers but a mirror, a beam splitter, or the like.

In the above embodiments, the processing nozzles 3 are arranged on the lower side of the substrate 0 and the laser beam is emitted upward. However, the processing nozzles 3 may be arranged on the upper side of the substrate 0 and the laser beam may be emitted downward, so that the laser beam is directly irradiated the surface to be processed without passing through the substrate 0.

The rolling bodies 45 provided in the support mechanism 4 are not limited to the ball bearings but may be rollers, an endless track, or the like.

Instead of providing the rolling bodies 45 in the support mechanism 4, a levitation device for blowing out the air upward, or the like may be provided. Particularly in the second embodiment, the levitation device can be installed in a part of the support mechanism 4 where the openings 47 are not provided, and supported in a state that the substrate 0 is levitated from the support mechanism 4 by the air.

Specific configurations of the parts can be variously modified within a scope not departing from the gist of the present invention.

### INDUSTRIAL APPLICABILITY

The present invention can be utilized for performing laser scribing, patterning, and the like to a thin film in a manufacturing process of for example, a solar panel, an organic EL display, and a plasma display.

### DESCRIPTION OF REFERENCE SIGNS

- 1:: Laser beam machine
- 2:: Retention mechanism
- 3:: Processing nozzle
- 4:: Support mechanism
- 45:: Rolling body
- X:: Pitch feed direction of processing nozzle
- Y:: Traveling direction of processing nozzle

## Claims

1. A laser beam machine comprising:
a retention mechanism for retaining a substrate not to be moved with a surface to be processed to which laser beam machining is performed up;
a processing nozzles traveling in the predetermined traveling direction for irradiating the surface to be processed of the substrate with a laser beam, the processing nozzles being also movable in the pitch feed direction crossing the traveling direction; and
a support mechanism relatively movable in the pitch feed direction relative to the substrate while supporting the substrate from the lower side.

2. The laser beam machine according to claim 1, wherein a plurality of rotatable rolling bodies are provided in the support mechanism, and a lower surface of the substrate is disposed on the rolling bodies.

3. The laser beam machine according to claim 1 or 2, wherein the processing nozzles are installed on the lower side of the substrate, and the laser beam is emitted upward, made pass through the substrate, and irradiated the surface to be processed.

4. The laser beam machine according to claim 3, wherein the processing nozzles are supported by the support mechanism to be able to travel in the traveling direction so as to be unitized, and the unit is movable in the pitch feed direction.

5. The laser beam machine according to claim 4, wherein the pluralities of units are arranged along the pitch feed direction.

6. The laser beam machine according to claim 3, wherein an opening extending along the traveling direction is formed in the support mechanism, and an optical axis of the processing nozzle passes through the opening.

7. The laser beam machine according to claim 6, wherein the plurality of openings and the plurality of processing nozzles are arranged along the pitch feed direction.
